Europäisches Patentamt

European Patent Office

Office européen des brevets

(19)

(11) **EP 0 784 437 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(21) Anmeldenummer: **95934657.8**

(22) Anmeldetag: **02.10.1995**

(51) Int. Cl.$^6$: **A23D 9/013**, A23L 1/30, A23C 11/04

(86) Internationale Anmeldenummer:
**PCT/EP95/03899**

(87) Internationale Veröffentlichungsnummer:
**WO 96/10922 (18.04.1996 Gazette 1996/17)**

(54) **PHOSPHOLIPIDHALTIGE FETTMISCHUNG MIT LCP-FETTSÄUREN**

MIXTURE OF PHOSPHOLIPID-CONTAINING FATS AND LCP FATTY ACIDS

MELANGE DE GRAISSES CONTENANT DES PHOSPHOLIPIDES AVEC DES ACIDES GRAS POLYINSATURES A LONGUE CHAINE

(84) Benannte Vertragsstaaten:
**AT BE CH DE DK ES FR GB GR IE IT LI LU NL PT**

(30) Priorität: **05.10.1994 DE 4435535**

(43) Veröffentlichungstag der Anmeldung:
**23.07.1997 Patentblatt 1997/30**

(73) Patentinhaber:
**MILUPA GmbH & Co. KG**
**61381 Friedrichsdorf (DE)**

(72) Erfinder:
• **KOHN, Gerhard**
  **55268 Nieder-Olm (DE)**
• **SAWATZKI, Günther**
  **35516 Münzenberg (DE)**
• **SCHWEIKHARDT, Friedrich**
  **61381 Friedrichsdorf (DE)**

(74) Vertreter:
**Köster, Hajo, Dr. et al**
**Jaeger, Böck & Köster,**
**Patentanwälte,**
**Pippinplatz 4a**
**82131 Gauting b. München (DE)**

(56) Entgegenhaltungen:
EP-A- 0 484 266    EP-A- 0 616 025
WO-A-92/12711    WO-A-92/21335
WO-A-93/25644    DE-A-19 505 305

**Beschreibung**

Die Erfindung betrifft eine Formelnahrung enthaltend eine Fettmischung auf Basis tierischer und pflanzlicher einschließlich mikrobieller, langkettig-hochungesättigte Fettsäuren aufweisender Öle und/oder Fette und Lecithine sowie eine derartige Fettmischung zur Herstellung einer Formelnahrung.

Langkettig-hochungesättigte Fettsäuren mit insbesondere 20 bis 22 Kohlenstoffatomen, sogenannte LCP-Fettsäuren, werden im menschlichen Organismus durch Kettenverlängerung und Desaturierung aus den essentiellen Fettsäuren Linol- und Linolensäure synthetisiert. Demzufolge müssen die Linolsäure (18-2w6) und die $\alpha$-Linolensäure (18-3w3), bei denen es sich um eine w6- bzw. w3-desaturierte Fettsäure handelt, mit der Nahrung aufgenommen werden. Dabei ist die Linolsäure die Ausgangsverbindung für die Gruppe der w6-LCP-, während die $\alpha$-Linolensäure die Ausgangsverbindung für die Gruppe der w3-LCP-Fettsäuren ist.

Die Eigensynthese der LCP-Fettsäuren ist beim rasch wachsenden Organismus des Säuglings jedoch noch stark eingeschränkt. Eine Versorgung nur mit den Präkursor-Fettsäuren Linolsäure und $\alpha$-Linolensäure ist nicht ausreichend. Anhand von Untersuchungen konnte festgestellt werden, daß Säuglinge, die nicht mit LCP-Fettsäuren in der Nahrung versorgt wurden, im Vergleich zu gestillten Säuglingen signifikante Unterschiede sowohl in biochemischen Parametern des Blutes wie auch in funktionellen Eigenschaften, wie Sehschärfe und psychomotorischen Tests, aufwiesen.

LCP-Fettsäuren, wobei der Arachidonsäure (AA; 20-4w6) und der Docosahexaensäure (DHA; 22-6w3) die größte Bedeutung zukommt, werden vor allem im letzten Drittel der Schwangerschaft und in den ersten Lebensmonaten nach der Geburt in erheblichem Umfang im Gehirn akkumuliert. Vorgeburtlich werden die LCP-Fettsäuren dem Fötus über die Plazenta zur Verfügung gestellt. Nachgeburtlich erhält der Säugling diese Fettsäuren mit der Muttermilch, denn Humanmilch enthält sowohl w6- als auch w3-LCP, wobei die Arachidon- und Docosahexaensäure die wichtigsten Mengenbestandteile darstellen.

Es sind nun bereits Formelnahrungen bzw. Säuglingsnahrungen bekannt, die derartige LCP-Fettsäuren aufweisen; diesbezüglich wird verwiesen auf EP-A 0 404 058, EP-A 0 231 904 und US-A 4 670 285. Bei diesen bekannten Säuglingsmilchnahrungen bzw. den darin enthaltenen Fettmischungen sind die Gehalte der LCP-Fettsäuren mehr oder minder an die Werte der Gesamtlipide von Frauenmilch angenähert. Bei diesen bekannten Formelnahrungen bzw. den darin enthaltenen Fettmischungen wird auf die Menge der supplementierten LCP-Fettsäuren abgestellt, jedoch nicht darauf, in welcher Form diese Fettsäuren gebunden sind.

Die Gesamtlipide der Frauenmilch setzen sich zu etwa 97 bis 99 % aus Triacylglyceriden und zu etwa 0,5 bis 2 % aus Phospholipiden zusammen. Außerdem treten noch freie Fettsäuren, Mono- und Diacylglyceride, Glycolipide sowie Cholesterol und Phytosterole in der Frauenmilch auf. Die LCP-Fettsäuren in der Frauenmilch liegen zu etwa 90 bis 95 % in Form von Triglyceriden und zu etwa 5 bis 10 % in Form von Phospholipiden vor.

Im Gegensatz dazu wird in der EP-A-0 484 266 die unzutreffende Auffassung vertreten, daß die Hauptmenge der langkettigen hochungesättigten Fettsäuren (LCP-Fettsäuren) in der Humanmilch in Form von Phospholipiden vorlägen. Deshalb wird dort die Zugabe von LCP-Fettsäuren in Form von Phospholipiden aus dem Hirnfett von Säugetieren zu diätetischen Nahrungen empfohlen. Durch die Verwendung von derartigen Fettsäure-Phospholipid-Zusammensetzungen und durch die zusätzliche Verwendung von Fischöl werden die LCP-Gehalte auch bei diesen bekannten Nahrungen an die Verhältnissse der Gesamtlipide von Frauenmilch angepaßt.

Es ist im übrigen aufgrund der Zusammensetzung der tierischen und/oder pflanzlichen Ausgangsstoffe nicht möglich, Säuglingsnahrungen bzw. eine Fettmischung auf Basis tierischer und pflanzlicher Fette und Öle derart zusammenzusetzen, daß diese "künstliche" Nahrung der Frauenmilch mehr oder weniger exakt entspricht. Vielmehr muß ausgewählt und entschieden werden, auf welche der vielen Bestandteile es ankommt und welche Bestandteile man in welchen Mengen einer "künstlichen" Nahrung zugibt.

Versucht man nun, die Fettmischung in Frauenmilch auf Basis tierischer, pflanzlicher und mikrobieller Öle, Fette und Lecithine mehr oder weniger im Hinblick auf die LCP-Fettsäuren nachzubauen, dann ist dies nur mit teuren Rohstoffen möglich, die zudem noch nicht einmal in ausreichender Menge zur Verfügung stehen.

Aufgabe der vorliegenden Erfindung ist es, eine verbesserte Formelnahrung sowie eine verbesserte Fettmischung zur Herstellung dieser Formelnahrung bereitzustellen, die der Ernährungsqualität von Frauenmilch möglichst nahekommt.

Gelöst wird diese Aufgabe durch die Lehre des Anspruchs 1 bzw. des Anspruchs 6.

Die den Stand der Technik repräsentierenden Formelnahrungen bzw. Fettmischungen sind bezüglich ihres Gehaltes (absolut) an den hier interessierenden LCP-Fettsäuren an die Verhältnisse der Gesamtlipide aus Frauenmilch angepaßt. Es wurde nun überraschenderweise gefunden, daß man den Gehalt der Formelnahrungen an LCP-Fettsäuren insgesamt senken kann, wenn die Arachidonsäure und Docosahexaensäure teilweise in Form von Phospholipiden in der erfindungsgemäßen Menge zur Verfügung steht.

Man kann somit die Zugabe von LCP-Fettsäuren in Form von Triglyceriden, wie dies bei den bekannten Formelnahrungen der Fall ist, erheblich reduzieren und dadurch die Kosten für die Supplementierung mit LCP-Fettsäuren senken.

2

Es wurde somit überraschenderweise gefunden, daß es darauf ankommt, daß ein gewisser Anteil der insgesamt vorhandenen Arachidonsäure und Docosahexaensäure in der physiologisch wichtigen Form der Phospholipide dem Neugeborenen zur Verfügung gestellt werden. Anhand klinischer Studien konnte gezeigt werden, daß Säuglinge, die mit einer Formelnahrung ernährt wurden, welche die in Form von Phospholipiden vorliegende Arachidonsäure in einer Menge von 0,3 bis 3,0 mg/g Gesamtfett sowie die in Form von Phospholipiden vorliegende Docosahexaensäure in einer Menge von 0,1 bis 2,0 mg/g Gesamtfett enthielt, wobei die Menge an Arachidonsäure und Docosahexaensäure in Form von Triglyceriden gegenüber den herkömmlichen Nahrungen gesenkt war, funktionelle Eigenschaften (Sehschärfe; motorische Eigenschaften) und biochemische Blutparameter aufweisen, die denen von gestillten Säuglingen sehr nahekommen. Es ist somit physiologisch entscheidend, daß die Docosahexaensäure und die Arachidonsäure sowohl in Triglyceridform als auch in Phospholipidform einer Formelnahrung in den erfindungsgemäß beanspruchten Mengen beigegeben wird.

Nach einer bevorzugten Ausführungsform beträgt das Gewichtsverhältnis der in Form von Triglyceriden vorliegenden Arachidonsäure zu der in Form von Triglyceriden vorliegenden Docosahexaensäure 0,5 : 1 bis 20 : 1.

Das Gewichtsverhältnis von in Form von Phospholipiden vorliegender Arachidonsäure zu in Form von Phospholipiden vorliegender Docosahexaensäure beträgt dabei vorzugsweise 0,5:1 bis 1:5.

Die Arachidonsäure und die Docosahexaensäure liegen dabei vorzugsweise als Phosphoglycerolipide, weiterhin vorzugsweise in Form von Phosphatidylcholin und Phosphatidylethanolamin vor. Gegenstand der Erfindung ist ferner eine Fettmischung, welche die LCP-Fettsäuren in der angegebenen Form und in den angegebenen Mengen enthält. Diese Fettmischung ist zur Herstellung einer Säuglings- und Frühgeborenennahrung, insbesondere Säuglingsmilchnahrung, geeignet. Mit dem Begriff Formelnahrung wird im übrigen jede "künstliche" und somit ohne Verwendung von Humanmilch bzw. ohne Verwendung von den Bestandteilen von Humanmilch hergestellte Formelnahrung verstanden.

Die erfindungsgemäße Formelnahrung und natürlich auch die erfindungsgemäße Fettmischung kann man herstellen, indem man Triacylglyceride enthaltende tierische und pflanzliche Öle und Fette mit tierischen, pflanzlichen und/oder mikrobiellen Phospholipiden (Lecithinen), die LCP-Fettsäuren enthalten, mischt. Als tierische Fette kann man beispielsweise Butterfett, Organfette, wie Nieren-, Leber- und Hirnfett, sowie Fischöle verwenden. Als pflanzliche Öle können Öle aus mono- und dicotylen Pflanzen (Palmöl, Sojaöl, Sonnenblumenöl etc.) eingesetzt werden. Außerdem können Öle aus mikrobiellem Ursprung (SCO) bzw. Algen- und Pilzöle benutzt werden. Die in Form von Phospholipiden eingesetzten LCP-Fettsäuren Arachidon- und Docosahexaensäure werden in Form von Phospholipiden aus tierischem, pflanzlichem und mikrobiellem Ursprung in die erfindungsgemäße Fettmischung bzw. Formelnahrung eingebracht. Zu diesen Phospholipiden zählen Lecithine aus Fischen, aus anderen marinen Organismen, wie Säugetieren, Krill, Cephalopoden, etc., aus Eilipiden, aus tierischen Hirn- und anderen Organlipiden und aus Makro- und Mikroalgen und/oder aus Mikroorganismen.

Geht man davon aus, daß eine fertige Formelnahrung (z.B. Säuglingsmilchnahrung) einen Fettgehalt von 4 % bzw. 4 g/100 ml besitzt, dann machen in einer erfindungsgemäßen Formelnahrung die in Form von Phospholipiden vorliegende Arachidonsäure 0,6 bis 15 mg sowie die in Form von Phospholipiden vorliegende Docosahexaensäure 0,3 bis 10 mg pro 100 ml Formelnahrung aus. Gegenstand der Erfindung ist auch ein Verfahren zur Herstellung einer erfindungsgemäßen Fettmischung. Dabei werden tierische, pflanzliche und/oder mikrobielle Öle und/oder Fette, die keine LCP-Fettsäuren bzw. nur geringe LCP-Fettsäureanteile enthalten (es handelt sich dabei insbesondere um Fette und Öle, die bereits früher zur Herstellung von nicht mit LCP-Fettsäuren supplementierten Formelnahrungen eingesetzt wurden), mit einer Quelle für Arachidonsäure und Docosahexaensäure, die in Form von Phospholipiden vorliegen, bzw. mit tierischen, pflanzlichen einschließlich mikrobiellen Ölen, Fetten und/oder Lecithinen, die Arachidonsäure und Docosahexaensäure in Form von Phospholipiden enthalten, auf bekannte Weise derart vermischt, daß diese Arachidonsäure und Docosahexaensäure die in den Ansprüchen 1 bis 4 spezifizierten Werte erfüllen. Die Vermischung der verschiedenen Öle, Fette und/oder Lecithine kann dabei nach dem Stand der Technik geschehen; diesbezüglich wird beispielsweise verwiesen auf EP-A 0 231 904 und EP-A 0 404 058. Aus dieser Fettmischung kann dann eine Formelnahrung ebenfalls nach dem Stand der Technik hergestellt werden.

In der nachfolgenden Tabelle 1 ist die Zusammensetzung von fünf erfindungsgemäßen Fettmischungen und das daraus resultierende Fettsäuremuster aufgeführt. Diese Fettmischungen werden durch Vermischen der in dieser Tabelle 1 aufgeführten Fettrohstoffe hergestellt. Die Tabelle 2 zeigt die Zusammensetzung verschiedener erfindungsgemäßer Formelnahrungen, die unter Verwendung der in der Tabelle 1 erläuterten Fettmischungen hergestellt wurden. Zur Herstellung der in der Tabelle 2 aufgeführten Formelnahrungen werden die dort wiedergegebenen Bestandteile miteinander vermischt. Durch Zugabe von Trinkwasser können daraus trinkfertige Formelnahrungen hergestellt werden. Dazu gibt man 13 g der in der Tabelle 2 beschriebenen Zusammensetzung bzw. Formelnahrung zu 90 ml Trinkwasser und vermischt. 100 ml der so erhaltenen trinkfertigen Formelnahrungen haben die in der sich daran anschließenden Tabelle 3 aufgeführten absoluten Gehalte an den dort erwähnten Fettsäuren.

Die in den vorliegenden Unterlagen verwendete Kurzbezeichnung bzw. Nomenklatur für die Fettsäuren ist unter anderem näher erläutert in "Lipid Analysis" von William W. Christie, Pergamon Press, 1973.

TABELLE 1

| Zusammensetzung mehrerer erfindungsgemäßer Fettmischungen und die daraus resultierenden Fettsäuremuster (Angaben in Gew.-%) | | | | | |
|---|---|---|---|---|---|
| | Bsp.1 | Bsp.2 | Bsp.3 | Bsp.4 | Bsp.5 |
| **Fettrohstoffe:** | | | | | |
| Butterfett | 30 | 30 | 30 | 30 | 30 |
| Sonnenblumenöl (Hyp.) | 10 | 10 | 10 | 10 | 10 |
| Palmöl | 25 | 24 | 21,5 | 21,5 | 21,5 |
| Kokos/Palmkernfett | 14 | 13 | 12 | 10 | 7 |
| Canolaöl | 5 | 5 | 5 | 5 | 5 |
| Soyaöl | 14 | 13,5 | 13,5 | 11,5 | 9,5 |
| Lezithin[1] | 2 | 4 | 8 | 12 | 17 |
| **Fettsäuren:** | | | | | |
| 4-0 | 0,77 | 0,77 | 0,77 | 0,77 | 0,77 |
| 6-0 | 0,59 | 0,59 | 0,59 | 0,59 | 0,59 |
| 8-0 | 1,25 | 1,18 | 1,12 | 1,00 | 0,81 |
| 10-0 | 1,66 | 1,60 | 1,55 | 1,44 | 1,27 |
| 12-0 | 8,56 | 8,03 | 7,49 | 6,45 | 4,88 |
| 14-0 | 6,31 | 6,14 | 5,94 | 5,60 | 5,10 |
| 16-0 | 22,73 | 22,86 | 22,52 | 23,08 | 23,78 |
| 16-1 | 0,71 | 0,75 | 0,82 | 0,91 | 1,01 |
| 18-0 | 5,13 | 5,21 | 5,37 | 5,54 | 5,76 |
| 18-1w9/w7 | 33,81 | 34,27 | 34,65 | 35,78 | 37,26 |
| 18-2w6 | 13,86 | 13,85 | 14,17 | 13,72 | 13,44 |
| 18-3w6 | 0,08 | 0,08 | 0,09 | 0,08 | 0,07 |
| 18-3w3 | 1,73 | 1,73 | 1,80 | 1,75 | 1,73 |
| 20-3w6 | 0,02 | 0,03 | 0,03 | 0,04 | 0,05 |
| 20-4w6 | 0,07 | 0,10 | 0,17 | 0,24 | 0,33 |
| 20-5w3 | | | | | |
| 22-6w3 | 0,04 | 0,07 | 0,13 | 0,20 | 0,28 |

[1]= die Angaben beziehen sich auf eine Lezithinfraktion auf Basis von Eilipiden mit einem Phospholipidanteil von 30 Gew.-% am Gesamtfett.

TABELLE 2

| Zusammensetzung verschiedener erfindungsgemäßer Formelnahrungen (Angaben in g) | |
|---|---|
| Fettmischung gemäß einem der Bsp. 1 - 5 | 27,7 g |
| Molkenprotein | 7,4 g |

TABELLE 2 (fortgesetzt)

| Zusammensetzung verschiedener erfindungsgemäßer Formelnahrungen (Angaben in g) | |
|---|---|
| Casein | 6,6 g |
| Lactose | 55,1 g |
| Mineralstoffe & Spurenelemente | 3,0 g |
| Vitaminmischung | 0,2 g |
| | $\overline{100,0\ g}$ |

Zur Herstellung einer trinkfertigen Formelnahrung werden 13 g der oben beschriebenen Zusammensetzung mit 90 ml Trinkwasser vermischt.

TABELLE 3

| Absoluter Gehalt an Arachidon- und Docosahexaensäure in Säuglingsnahrungen | | | | | |
|---|---|---|---|---|---|
| Fettsäure Angaben in: | abs.Gehalt aus Phospholipiden mg/100 ml | | | | |
| | Bsp.1 | Bsp.2 | Bsp.3 | Bsp.4 | Bsp.5 |
| Arachidonsäure (AA) | 1,1 | 2,1 | 4,2 | 6,4 | 9,0 |
| Docosahexaensäure (DHA) | 0,8 | 1,7 | 3,3 | 5,0 | 7,0 |
| Fettsäure Angaben in: | abs.Gehalt aus Triglyceriden mg/100 ml | | | | |
| | Bsp.1 | Bsp.2 | Bsp.3 | Bsp.4 | Bsp.5 |
| Arachidonsäure (AA) | 0,7 | 0,8 | 1,0 | 1,3 | 1,5 |
| Docosahexaensäure (DHA) | 0,05 | 0,1 | 0,2 | 0,3 | 0,5 |

**Patentansprüche**

1.  Formelnahrung enthaltend eine Fettmischung auf Basis tierischer, pflanzlidocher einschließlich gegebenenfalls mikrobieller, langkettig-hochungesättigte Fettsäuren aufweisender Öle und/oder Fette und Lecithine,
    dadurch **gekennzeichnet,**
    daß die in der Fettmiscahung in Form von Phospholipiden vorliegende Arachidonsäure 0,2 bis 3,0 mg/g Gesamtfett und die in Form von Phospholipiden vorliegende Docosahexaensäure 0,1 bis 2,0 mg/g Gesamtfett ausmachen und daß die in der Fettmischung in Form von Triglyceriden vorliegende Arachidonsäure und Docosahexaensäure jeweils 0,05 bis 1,5 Gew.-% ausmachen, bezogen auf die Summe der in Form von Triglyceriden vorliegenden Fettsäuren.

2.  Formelnahrung nach Anspruch 1,
    dadurch **gekennzeichnet**,
    daß das Gewichtsverhältnis der in Form von Triglyceriden vorliegenden Arachidonsäure zu der in Form von Triglyceriden vorliegenden Docosahexaensäure 0,5 : 1 bis 20 : 1 beträgt.

3.  Formelnahrung nach Anspruch 1 oder 2,
    dadurch **gekennzeichnet,**
    daß das Gewichtsverhältnis der in Form von Phospholipiden vorliegenden Arachidonsäure zu der in Form von Phospholipiden vorliegenden Docosahexaensäure 0,5 : 1 bis 5 : 1 beträgt.

4.  Formelnahrung nach einem der vorhergehenden Ansprüche,
    dadurch **gekennzeichnet,**
    daß die Arachidonsäure aus Phospholipiden 0,5 bis 1,5 mg/g Gesamtfett und die Docosahexaensäure aus Pospholipiden 0,2 bis 1,0 mg/g Gesamtfett ausmachen.

5. Formelnahrung nach einem der vorhergehenden Ansprüche,
dadurch **gekennzeichnet,**
daß die Arachidonsäure und Docosahexaensäure zumindest teilweise in Form von Phosphatidylcholin und Phosphatidylethanolamin vorliegen.

6. Fettmischung zur Herstellung von Formelnahrungen mit einer Zusammensetzung nach einem der vorhergehenden Ansprüche.

7. Verfahren zur Herstellung einer in einem der Ansprüche 1 bis 5 beschriebenen Fettmischung,
dadurch **gekennzeichnet**,
daß man tierische, pflanzliche und/oder mikrobielle Öle und/oder Fette, die keine LCP-Fettsäuren enthalten, mit tierischen, pflanzlichen und/oder mikrobiellen Ölen, Fetten und/oder Lecithinen, die Arachidonsäure und Docosahexaensäure in Form von Phospholipiden und/oder Triglyceriden enthalten, derart auf per se bekannte Weise vermischt, daß die Arachidonsäure und Docosahexaensäure den in den Ansprüchen 1 bis 5 spezifizierten Werten entsprechen.

## Claims

1. Formula food containing a fat mixture based on animal and plant, including optionally microbial, oils and/or fats and lecithins containing long-chain polyunsaturated fatty acids, characterised in that the arachidonic acid present in the fat mixture in the form of phospholipids makes up 0.2 to 3.0 mg/g total fat and the docosahexaenoic acid present in the form of phospholipids makes up 0.1 to 2.0 mg/g total fat, and that the arachidonic acid and docosahexaenoic acid present in the fat mixture in the form of triglycerides each make up 0.05 to 1.5 wt %, based on the sum of the fatty acids present in the form of triglycerides.

2. Formula food according to claim 1, characterised in that the weight ratio of the arachidonic acid present in the form of triglycerides to the docosahexaenoic acid present in the form of triglycerides is 0.5:1 to 20:1.

3. Formula food according to claim 1 or 2, characterised in that the weight ratio of the arachidonic acid present in the form of phospholipids to the docosahexaenoic acid present in the form of phospholipids is 0.5:1 to 5:1.

4. Formula food according to one of the above claims, characterised in that the arachidonic acid from phospholipids makes up 0.5 to 1.5 mg/g total fat and the docosahexaenoic acid from phospholipids makes up 0.2 to 1.0 mg/g total fat.

5. Formula food according to one of the above claims, characterised in that the arachidonic acid and docosahexaenoic acid are at least partly present in the form of phosphatidylcholine and phosphatidylethanolamine.

6. Fat mixture for the preparation of formula foods with a composition according to one of the above claims.

7. Process for the preparation of a fat mixture described in one of the claims 1 to 5, characterised in that animal, plant and/or microbial oils and/or fats which contain no LCP fatty acids are mixed with animal, plant and/or microbial oils, fats and/or lecithins which contain arachidonic acid and docosahexaenoic acid in the form of phospholipids and/or triglycerides in a manner known per se, such that the arachidonic acid and docosahexaenoic acids correspond to the values specified in claims 1 to 5.

## Revendications

1. Mélange nutritif contenant un mélange de graisses à base de lécithines, d'huiles et/ou de graisses d'origine animale, végétale y compris éventuellement microbienne, présentant des acides gras hautement insaturés à chaîne longue, caractérisé en ce que la teneur en acide arachidonique présent dans le mélange de graisses sous forme de phospholipides est de 0,2 à 3,0 mg/g de graisses totales et la teneur en acide docosahexanéoïque présent dans le mélange de graisses sous forme de phospholipides est de 0,1 à 2,0 mg/g de graisses totales et en ce que les teneurs en acide arachidonique et en acide docosahexanéoïque présents sous forme de triglycérides dans le mélange de graisses étant de 0,05 à 1,5 % en poids, par rapport à la somme des acides gras présents sous forme de triglycérides.

**2.** Mélange nutritif selon la revendication 1, caractérisé en ce que le rapport pondéral de l'acide arachidonique présent sous forme de triglycérides à l'acide docosahexanéoïque présent sous forme de triglycérides est de 0,5:1 à 20:1.

**3.** Mélange nutritif selon la revendication 1 ou 2, caractérisé en ce que le rapport pondéral de l'acide arachidonique présent sous forme de phospholipides à l'acide docosahexanéoïque présent sous forme de phospholipides est de 0,5:1 à 5:1.

**4.** Mélange nutritif selon l'une des revendications précédentes, caractérisé en ce que la teneur en acide arachidonique dans les phospholipides est de 0,5 à 1,5 mg/g de graisses totales et la teneur en acide docosahexanéoïque dans les phospholipides est de 0,2 à 1,0 mg/g de graisses totales.

**5.** Mélange nutritif selon l'une des revendications précédentes, caractérisé en ce que l'acide arachidonique et l'acide docosahexanéoïque sont présents, au moins partiellement, sous forme de phosphatidylcholine et de phosphatidyléthanolamine.

**6.** Mélange de graisses pour la préparation de mélanges nutritifs ayant une composition selon l'une des revendications précédentes.

**7.** Procédé de préparation d'un mélange de graisses selon l'une des revendications 1 à 5, caractérisé en ce que l'on mélange des huiles et/ou des graisses d'origine animale, végétale et/ou microbienne ne contenant pas d'acides gras LCP, avec des huiles, des graisses et/ou des lécithines d'origine animale, végétale et/ou microbienne, qui contiennent l'acide arachidonique et l'acide docosahexanéoïque sous forme de phospholipides et/ou de triglycérides, de façon connue en soi telle, que les teneurs en acide arachidonique et en acide docosahexanéoïque correspodent aux données spécifiées dans les revendications 1 à 5.